# EUROPEAN PATENT APPLICATION

(11) **EP 3 096 284 A1**
(43) Date of publication of application: **23.11.2016**
(21) Application number: 15757794.1
(22) Date of filing: 13.02.2015
(51) Int. Cl.: G06Q 50/10

(54) **REMOTE SERVER**

(30) Priority: 07.03.2014 JP 2014045373
(71) Applicant: Yanmar Co., Ltd., Osaka-shi, Osaka 530-8311 (JP)
(72) Inventor: SHINOHARA Yoshihiko, Osaka-shi Osaka 530-8311 (JP); NOBE Akira, Chikugo-shi Fukuoka 833-0055 (JP); MATSUMOTO Hidenori, Osaka-shi Osaka 530-8311 (JP)
(74) Representative: Hinkelmann, Klaus
(86) International application number: PCT/JP2015/053894
(87) International publication number: WO 2015/133243

(57) **Abstract**

In a remote server that receives from a work machine or a vessel, machine identification information, identifying the work machine or the vessel, and predetermined operation data, at least one of a managing entity of the work machine or the vessel and a sales entity in charge of the managing entity is identified based on the machine identification information, a base buying price of the work machine or the vessel is calculated based on the predetermined operation data received from the work machine or the vessel, and any one of a regular maintenance history input as appropriate and a regular maintenance history received from the work machine or the vessel, and the base buying price calculated is set to be viewable in at least one of the managing entity and the sales entity when a predetermined period elapses after a predetermined counting start day.

## Description

### Technical Field

The present invention relates to a remote server for calculating a price of a used work machine and the like.

### Background Art

For example, Patent Literature 1 discloses a system related to price assessment of a used work machine and the like. In this used vehicle information processing system, a mobile terminal transmits associating processing data to a server of a used construction machine dealer. In the associating processing data, image data, obtained by capturing an image of a used construction machine vehicle, is associated with basic item data, each item data, icon data, and defective portion input data.

The used vehicle information processing system described in Patent Literature 1 presents information required for the price assessment, but does not present the buying price of the used work machine and the like.

### Citation List

### Patent Literature

PTL1: Japanese Patent No. 4181857

### Summary of Invention

### Technical Problem

In view of the above, an object of the present invention is to provide a configuration that can calculate a buying price of a used work machine and the like. Solution to Problem

To achieve the object described above, the present invention provides a remote server that receives from a work machine or a vessel, machine identification information, identifying the work machine or the vessel, and predetermined operation data, in which at least one of a managing entity of the work machine or the vessel and a sales entity in charge of the managing entity is identified based on the machine identification information, in which a base buying price of the work machine or the vessel is calculated based on the predetermined operation data received from the work machine or the vessel, and any one of a regular maintenance history input as appropriate and a regular maintenance history received from the work machine or the vessel, and in which the base buying price calculated is set to be viewable in at least one of the managing entity and the sales entity when a predetermined period elapses after a predetermined counting start day.

As another exemplary aspect of the present invention, the base buying price may be calculated by being increased for the work machine or the vessel as a contract covered work machine or a contract covered vessel covered by a predetermined maintenance agreement, and/or by being reduced for the work machine or the vessel as a contract uncovered work machine or a contract uncovered vessel not covered by the predetermined maintenance agreement.

As another exemplary aspect of the present invention, the base buying price viewable in the managing entity may be limited to the base buying price of the work machine or the vessel as the contract covered work machine or the contract covered vessel covered by the predetermined maintenance agreement.

### Advantageous Effects of Invention

With the present invention, a buying price of a used work machine or vessel can be calculated.

### Brief Description of Drawings

[Fig. 1] Fig. 1 is a schematic configuration diagram schematically illustrating a remote monitoring system for remotely monitoring work machines.
[Fig. 2] Fig. 2 is a block diagram illustrating a schematic configuration of the work machine including a remote monitoring terminal device
[Fig. 3] Fig. 3 is a block diagram illustrating a schematic configuration of the remote monitoring terminal device in the work machine.
[Fig. 4] Fig. 4 is a table illustrating specific examples of output elements corresponding to various connection terminals in a case where the work machine is a combine harvester.
[Fig. 5] Fig. 5 is an operation diagram illustrating a procedure of processing of operation data transmission control executed by an operation data transmission control unit in a control unit of the remote monitoring terminal device.
[Fig. 6] Fig. 6 is a flowchart illustrating an example of a control processing executed by the operation data transmission control unit.
[Fig. 7] Fig. 7 is a schematic block diagram illustrating a schematic configuration of a control unit in a remote server provided in a remote monitoring center.
[Fig. 8] Fig. 8 is a schematic diagram illustrating an example of a data structure of a first database storing therein, for each machine identification information, a regular maintenance history including part identification information, maintenance content information, and maintenance executed timing information.
[Fig. 9] Fig. 9 is a schematic diagram illustrating an example of a data structure of operation data stored in a storage unit.
[Fig. 10] Fig. 10 is a schematic diagram illustrating an example of a data structure of a reference maintenance timing set in advance in a storage unit.
[Fig. 11] Fig. 11 is a schematic diagram illustrating an example of a data structure of a second database storing therein machine identification information and model information that are associated with each other.
[Fig. 12] Fig. 12 is a schematic diagram illustrating an example of a data structure of a base buying price list table in which base buying price is stored for each model information.
[Fig. 13] Fig. 13 is a schematic diagram illustrating an example of a data structure of a third database storing therein machine identification information, managing entity information, and sales entity information that are associated with each other.
[Fig. 14] Figs. 14 is a flowchart illustrating an example of control processing executed by a control unit in a remote server, and illustrates the first half of the processing.
[Fig. 15] Fig. 15 is a flowchart illustrating an example of control processing executed by a control unit in a remote server, and illustrates the second half of the processing. Description of Embodiments

An embodiment of the present invention is described with reference to the attached drawings. In the embodiment, a work machine (for example, an agricultural machine) such as a combine harvester, a tiller, or a rice-trans planter is described as an example of a work machine or a vessel.

### [Overall configuration of remote monitoring system]

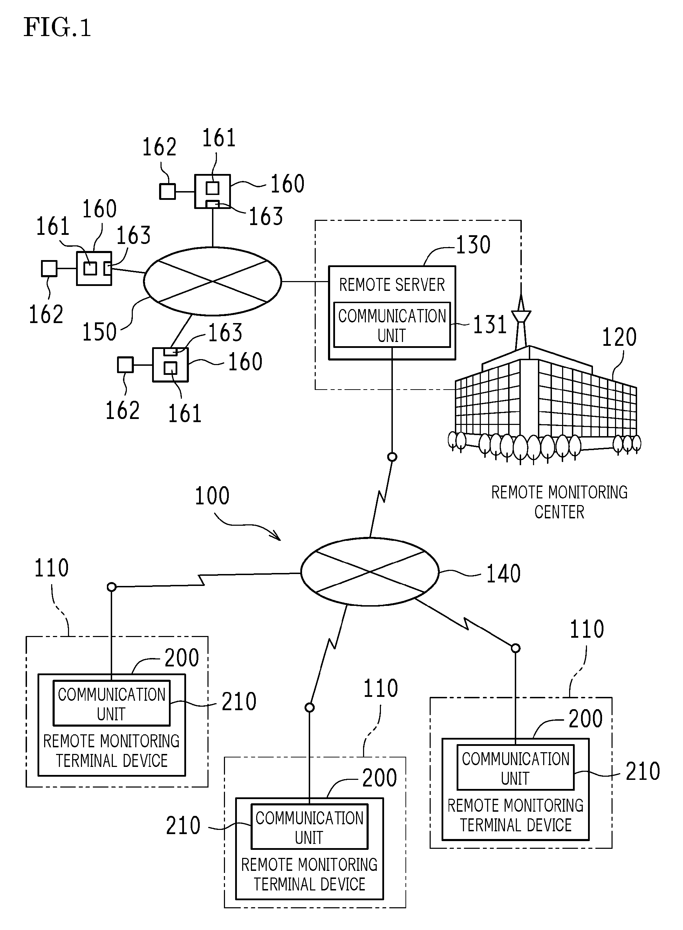

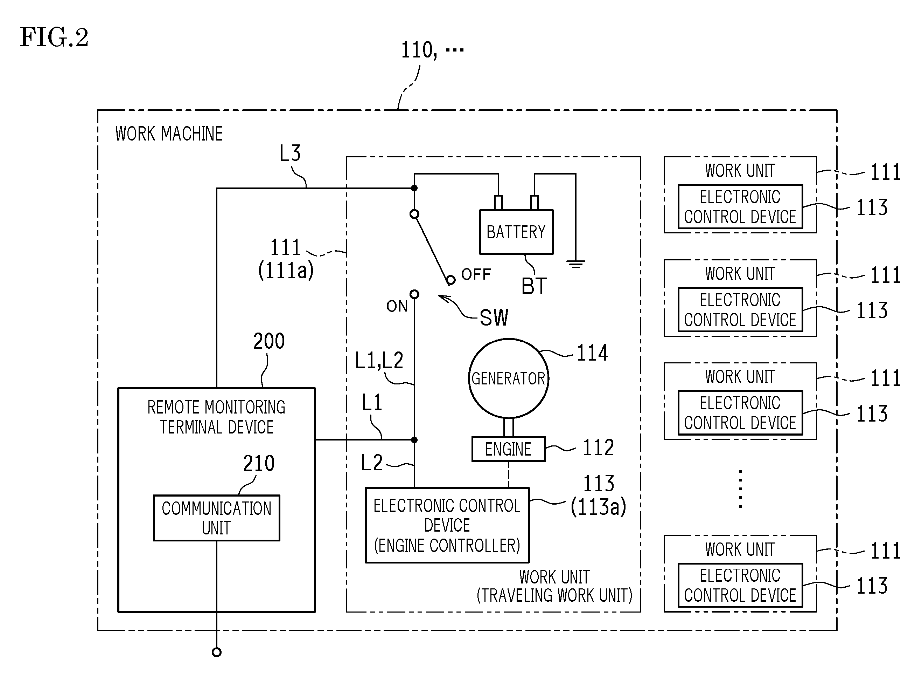

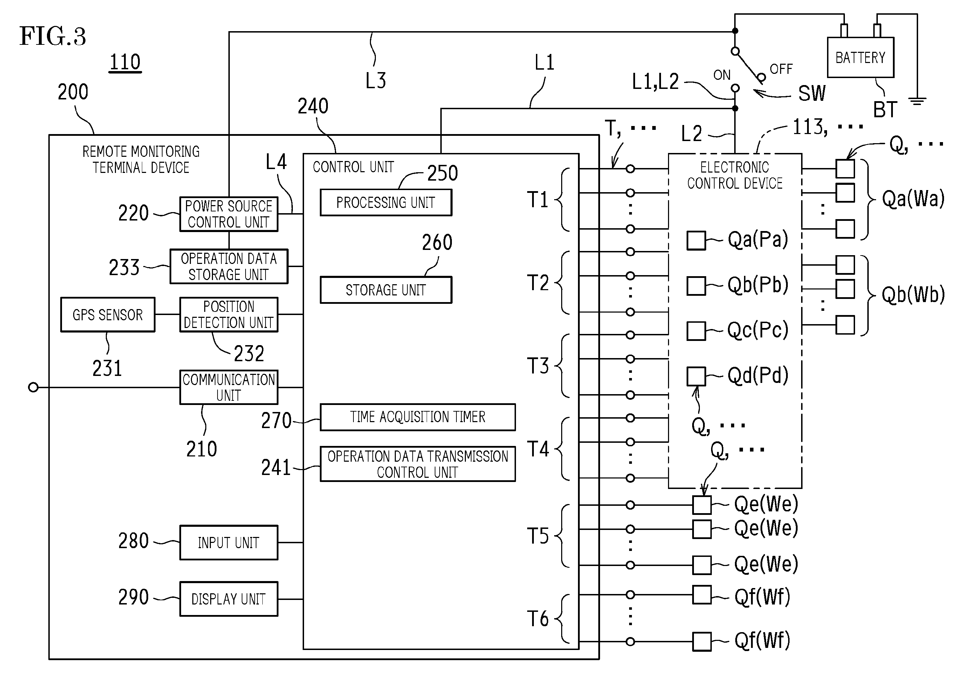

Fig. 1 is a schematic configuration diagram schematically illustrating a remote monitoring system 100 for remotely monitoring work machines 110, .... Fig. 2 is a block diagram illustrating a schematic configuration of each of the work machine 110, ... including a remote monitoring terminal device 200. Fig. 3 is a block diagram illustrating a schematic configuration of the remote monitoring terminal device 200 in the work machine 110.

As illustrated in Fig. 1, the remote monitoring system 100 includes: one or a plurality of (plurality in this example) the work machines 110; the remote monitoring terminal device 200 provided in each of the work machines 110; and a remote server 130 connected to the remote monitoring terminal device 200 through a communication network 140.

The remote server 130 is provided in a remote monitoring center 120 at a location far away from the work machines 110, ..., and collects and accumulates predetermined operation data that is data related to an operation status of the work machine 110. The remote server 130 is connected to terminal devices (more specifically, client computers) 160, ..., such as a personal computer, a tablet computer, or a mobile terminal device, through a network 150 such as a local area network (LAN) or the Internet. The data accumulated is fetched by the terminal devices 160, ... to be usable by a user such as an owner, a dealer, and the like of the work machine 110. The terminal device 160 includes: a control unit 161; an input unit 162 including a keyboard, a pointing device, and the like; and a display unit 163 such as a display. The control unit 161 displays display information and various input screens, based on data transmitted from the remote server 130, on the display unit 163, and receives required information input through the input unit 162.

More specifically, the remote monitoring terminal device 200 and the remote server 130 respectively include communication units 210 and 131 (more specifically, communication modules). The remote monitoring terminal device 200 and the remote server 130 are connected to each other through the communication network 140 with their communication units 210 and 131. Thus, information can be transmitted and received between the remote monitoring terminal device 200 and the remote server 130. With such a configuration, the remote server 130 enables the user in the remote monitoring center 120 to remotely monitor the work machines 110, ....

The communication network 140 may be a wired communication network, a wireless communication network, and a combination of the wired communication network and the wireless communication network. A typical example of the communication network 140 includes a public line network that is provided by a telecommunications carrier for communications between terminal devices such as a fixed phone and a mobile phone.

As illustrated in Fig. 2, the work machines 110, ... each include one or a plurality of (plurality in this example) work units 111, ... and the remote monitoring terminal device 200. The work units 111, ... in an example where the work machine is a combine harvester may include a traveling work unit, a reaping work unit, a threshing work unit, and the like.

The work units 111, ... each includes a corresponding one of electronic control devices (more specifically, controllers) 113, .... The electronic control devices 113, ... each issue an instruction to various actuators (not illustrated) so that control is performed for achieving an appropriate driving state of each of the work units 111, .... The electronic control devices 113, ... transmit and receive data to and from each other based on a controller area network (CAN) standard.

More specifically, the electronic control devices 113, ... each operate to control the driving state of a corresponding one of the work units 111, ... based on detected value information (signal) and ON/OFF information on various switches detected by various sensors in the corresponding one of the work units 111, .... The electronic control devices 113, ... each determine whether abnormality such as a failure of the work machine 110 has occurred, as appropriate. When the abnormality occurs, the electronic control device 113 generates error information (more specifically, an error code) corresponding to the abnormality.

A work unit (traveling work unit 111a), which is one of the work units 111, ... that operates an engine 112, includes: the engine 112; the electronic control device 113 (engine controller 113a) that controls the entire engine by monitoring the engine speed and a load condition of the engine 112, and instructing optimum injection pressure and injection timing to a fuel system; a generator 114; and a starting switch SW, and is provided with a battery BT. The electronic control device 113 (engine controller 113a) performs operation control for the work unit 111 (traveling work unit 111a), as well as driving start/stop operation, and driving state control by driving the engine 112.

While the engine 112 is operating, the battery BT in the work unit 111 (traveling work unit 111a) is charged as appropriate by power supplied from the generator 114.

The starting switch SW of the work unit 111 (traveling work unit 111a) is a selector switch for selectively switching between a power ON state and a power OFF state. In the power ON state, the battery BT supplies power to a control unit 240 (see Fig. 3) of the remote monitoring terminal device 200 and the electronic control device 113 (engine controller 113a). In the power OFF state, the power supply from the battery BT to the control unit 240 of the remote monitoring terminal device 200 and the electronic control device 113 (engine controller 113a) is cut off.

More specifically, the battery BT is connected to both a power source connection line L1 and a power source connection line L2 through the starting switch SW. The power source connection line L1 is connected to the control unit 240 of the remote monitoring terminal device 200. The power source connection line L2 is connected to the electronic control device 113 (engine controller 113a).

In this example, the starting switch SW serves as what is known as a key switch and has an "ON" terminal as a connection terminal for the power source connection lines L1 and L2 and an "OFF" terminal as a terminal in a state where the starting switch SW is in an OFF state.

Regardless of whether the starting switch SW is in an ON state or the OFF state, the battery BT is connected to a power source control unit 220 (see Fig. 3) of the remote monitoring terminal device 200 through a power source connection line L3.

### [Remote monitoring terminal device]

As illustrated in Fig. 3, the remote monitoring terminal device 200 includes: the communication unit 210; the control unit 240 that transmits and receives data through communications, various types of input/output control, and calculation processing control; the power source control unit 220 that supplies power to the control unit 240; and a plurality of connection terminals T, ... to which operation data on an operation status of the work machine 110 is input.

### (Communication unit)

The communication unit 210 can communicate with the communication unit 131 of the remote server 130 in the remote monitoring center 120 (see Fig. 1) under a common communication protocol. The data transmitted and received through communications is converted by the communication unit 210 to be suitable for the communication protocol. The communication unit 210 transmits operation data on the work machine 110 and the like, acquired by the control unit 240, to the remote server 130.

### (Power source control unit)

The power source control unit 220 is connected to the battery BT regardless of whether the starting switch SW is in the OFF state or the ON state. More specifically, the power source control unit 220 has an input side power source line (not illustrated) connected to the battery BT through the power source connection line L3. Thus, the battery BT constantly supplies power to the power source control unit 220.

The control unit 240 has a power source line (not illustrated) connected to an output side power source line (not illustrated) of the power source control unit 220 through a power source connection line L4.

### (Position detection unit)

In the present embodiment, the remote monitoring terminal device 200 further includes: a GPS sensor (an example of a position sensor) 231 that receives electric waves from a Global Positioning System (GPS) satellite; a position detection unit 232 that detects the positional information and the like on the work machine 110 based on the electric waved received by the GPS sensor 231; and an operation data storage unit 233 that temporarily stores various types of data including the positional information detected by the position detection unit 232.

The GPS sensor 231 receives electric waves (information including the world standard time) from the GPS satellite. Here, the world standard time is Universal Time, Coordinated (UTC).

The position detection unit 232 can detect information on a current location of the work machine 110, as well as speed information on the work machine 110 and azimuth information on the work machine 110. Thus, the positional information includes information on the latitude, the longitude, the speed, and the azimuth of the work machine 110.

More specifically, the position detection unit 232, the GPS sensor 231, and the GPS satellite form a GPS satellite system (positioning system).

The operation data storage unit 233 includes a nonvolatile memory such as a flash memory. The operation data storage unit 233 is connected to the power source control unit 220 and is constantly supplied with power from the battery BT.

### (Control unit)

The control unit 240 includes: a processing unit 250 including a microcomputer such as a central processing unit (CPU); a storage unit 260 including a nonvolatile memory, such as a read only memory (ROM), and a volatile memory such as a RAM; and a time acquisition timer 270 having a clock function for obtaining date and time information on the remote monitoring terminal device 200.

The control unit 240 performs operation control on various components, with the processing unit 250 loading a control program, stored in the ROM of the storage unit 260 in advance, onto the RAM of the storage unit 260 and executing the control program.

### (Connection terminal)

The plurality of (70 in this example) connection terminals T, ... are a plurality of types of connection terminals connected to output elements Q that output data on the operation status of the work machine 110. In the present embodiment, the connection terminals T, ... include: one or more (32 in this example) first connection terminals T1, ...; one or more (20 in this example) second connection terminals T2, ...; one or more (four in this example) third connection terminals T3, ...; one or more (four in this example) fourth connection terminals T4, ...; one or more (eight in this example) fifth connection terminals T5, ...; and one or more (two in this example) sixth connection terminals T6, ....

The first connection terminals T1, ..., second connection terminals T2, ..., third connection terminals T3, ..., and the fourth connection terminals T4, ... are connected to the control unit 240. The first connection terminals T1, ...and the second connection terminals T2 are each connected to a corresponding one of the output elements Q of the work units 111, ... through a corresponding one of the electronic control devices 113, .... The fifth connection terminals T5, ... and the sixth connection terminals T6, ... are connected to the control unit 240, and are each directly connected to a corresponding one of the output elements Q, ... of the work units 111, ....

The first connection terminals T1, ... are connected to output elements Qa, ... that output binary information (more specifically a binary signal) such as ON/OFF information (more specifically, contact information with a value 0 or 1) and error state information (more specifically, information indicating whether there is an error with a value 0 or 1) indicating whether there is an abnormality such as a failure, and thus receive the binary information from the output elements Qa, .... In this example, the binary information is transmitted as bit data compatible with the CAN.

Examples of the output elements Qa, ... that output the binary information include: various switches Wa, ... that are connected to an input system of the electronic control devices 113, ..., and output ON/OFF information on the operation status of the work machine 110; and an output control unit Pa provided to each of the electronic control devices 113, ... and outputs error state information indicating whether there is an abnormality such as a failure in a corresponding one of the work units 111, ....

More specifically, when the output elements Qa, ... are the various switches Wa, ..., the first connection terminals T1, ... receive the ON/OFF information from the various switches Wa, ... via the electronic control devices 113, .... When the output elements Qa, ... are the output control unit Pa, the first connection terminals T1, ... each receive the error state information from the output control unit Pa in a corresponding one of the electronic control devices 113, ....

The second connection terminals T2, ... are connected to output elements Qb, ... that output detected value information (more specifically, a multivalued digital signal) such as numerical value data indicating a value as a result of measuring (detecting) a predetermined physical quantity, an error code indicating a detail of the abnormality such as a failure, and a voltage value and the like of the battery BT. Thus, the second connection terminals T2, ... receive the detected value information from the output elements Qb, .... In this example, the detected value information is transmitted as numerical value data compatible with the CAN.

Examples of the output elements Qb, ... that output the detected value information include: various sensors Wb, ... that are connected to the input system of the electronic control devices 113, ... and detect the operation status of the work machine 110; and an output control unit Pb provided in the electronic control device 113 (engine controller 113a) and outputs the voltage value of the battery BT.

More specifically, when the output elements Qb, ... are the various sensors Wb, ..., the second connection terminals T2, ... receive the numerical value data from the various sensors Wb, ... via the electronic control devices 113, .... When the output elements Qb, ... is the output control unit Pb, the second connection terminals T2, ... receive the voltage value of the battery BT from the output control unit Pb in the electronic control device 113 (engine controller 113a).

The third connection terminals T3, ... are connected to output elements Qc, ... that output integrated information such as integrated time from integrate time meter (hour meter) that measures integrated time obtained by integrating operating time (driving time) of components such as the engine 112 related to the driving, and thus receive the integrated information from the output elements Qc, .... In this example, the integrated information is transmitted as integrated data compatible with the CAN.

Examples of the output elements Qc, ... that output the integrated information include an output control unit Pc that is provided in the electronic control device 113 (engine controller 113a), and outputs the integrated time obtained by integrating the operating time of the engine 112 (the operating time of the work machine 110) between the point where the engine 112 starts driving (a point where an ON operation for the starting switch SW is received) and a point where the engine 112 stops driving (a point where an OFF operation for the starting switch SW is received).

More specifically, when the output elements Qc, ... are the output control unit Pc, the third connection terminals T3, ... receive the integrated time related to the engine 112 from the output control unit Pc in the electronic control device 113 (engine controller 113a).

The fourth connection terminals T4, ... are connected to output elements Qd, ... that output error information related to the CAN communication protocol, and receive the error information from the output elements Qd, ....

Examples of the output elements Qd, ... that output the error information include an output control unit Pd provided in each of the electronic control devices 113, ..., recognizes a specification error related to the CAN communication protocol, and outputs the error information corresponding to the error.

More specifically, when the output elements Qd, ... are the output control unit Pd, the fourth connection terminals T4, ... receive the error information from the output control unit Pd in each of the electronic control devices 113, ....

The fifth connection terminals T5, ... are connected to output elements Qe, ... that output the binary information, and thus receive the binary information from the output elements Qe, ....

Examples of the output elements Qe, ... that output the binary information include various switches We, ... that output ON/OFF information on the operation status of the work machine 110.

More specifically, when the output elements Qe, ... are the various switch We, ..., the fifth connection terminals T5, ... directly receive the ON/OFF information from the various switches We, .... The fifth connection terminals T5, ... may be used when the work units 111, ... include the respective electronic control devices 113 ..., but is useful mainly when the work units 111, ... do not include the respective electronic control devices 113 ....

The sixth connection terminals T6, ... are connected to output elements Qf, ... that output detected value information (more specifically, an analog signal) on numerical value data indicating a value obtained by measuring (detecting) a predetermined physical quantity (for example, the voltage value of the battery BT and temperature of a substrate (not illustrated) mounted on the electronic control devices 113, ...) and thus receive the detected value information from the output elements Qf, ....

Examples of the output elements Qf, ... that output the detected value information include various sensors Wf, ... that detect the operation status of the work machine 110.

More specifically, when the output elements Qf, ... are the various sensors Wf, ..., the sixth connection terminals T6, ... directly receive the numerical value data from the various sensors Wf, ....

As illustrated in Fig. 3, the control unit 240 further includes an operation data transmission control unit 241, an input unit 280, and a display unit 290 that are described later.

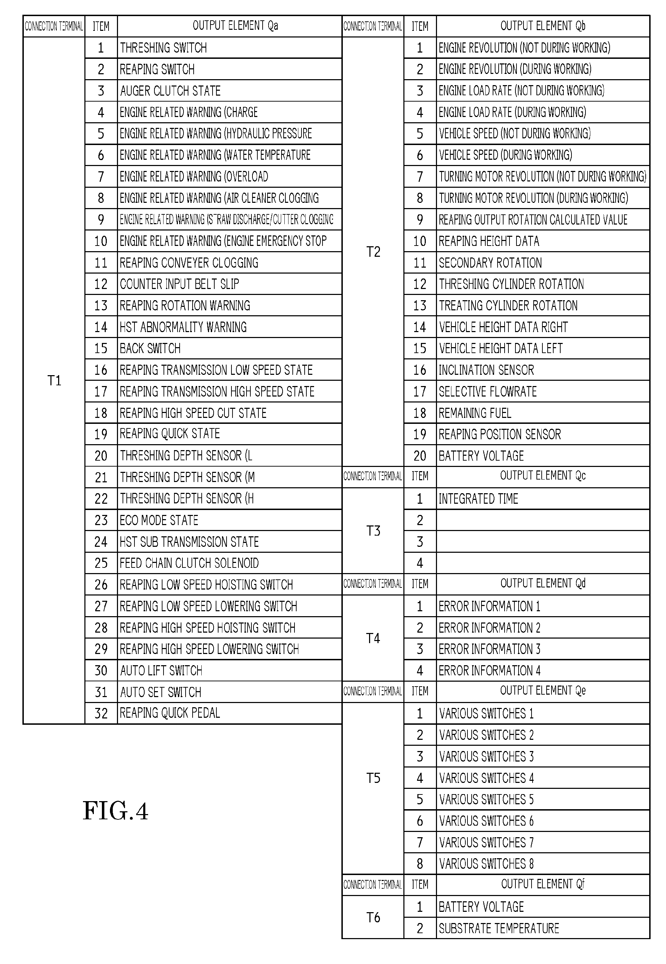

Fig. 4 is a table illustrating specific examples of the output elements Qa, ... to Qf, ... corresponding to the various connection terminals T1, ... to T6, ... in the case where the work machine 110 is a combine harvester.

As illustrated in Fig. 4, the output elements Qa, ... connected to the first connection terminals T1, ... input to the first connection terminals T1, ..., the binary information on 32 items including: threshing switch; reaping switch; and charge, hydraulic pressure, water temperature, overload, air cleaner clogging, straw discharge/cutter clogging, and emergency stop related to the engine. The output elements Qb, ..., connected to the second connection terminals T2, ..., input to the second connection terminals T2, ..., the detected value information on 20 items including: revolutions of the engine 112 per unit time at the time of working and not working; an engine load rate indicating the level of a load on the engine 112 at the time of working and not working; the vehicle speed at the time of working and not working; and revolutions of a turning motor per unit time at the time of working and not working. The output elements Qc, ..., connected to the third connection terminals T3, ..., input to the third connection terminals T3, ..., the integrated information on four items (the integrated information on one item in this example). The output elements Qd, ..., connected to the fourth connection terminals T4, ..., input to the fourth connection terminals T4, ..., the error information on four items. The output elements Qe, ..., connected to the fifth connection terminals T5, ..., input to the fifth connection terminals T5, ..., the binary information on eight items. The output elements Qf, ..., connected to the sixth connection terminals T6, ..., input to the sixth connection terminals T6, ..., the detected value information on two items (more specifically, the battery voltage and the substrate temperature).

The control unit 240 further includes the operation data transmission control unit 241 that transmits operation data to the remote server 130.

### [Operation data transmission control]

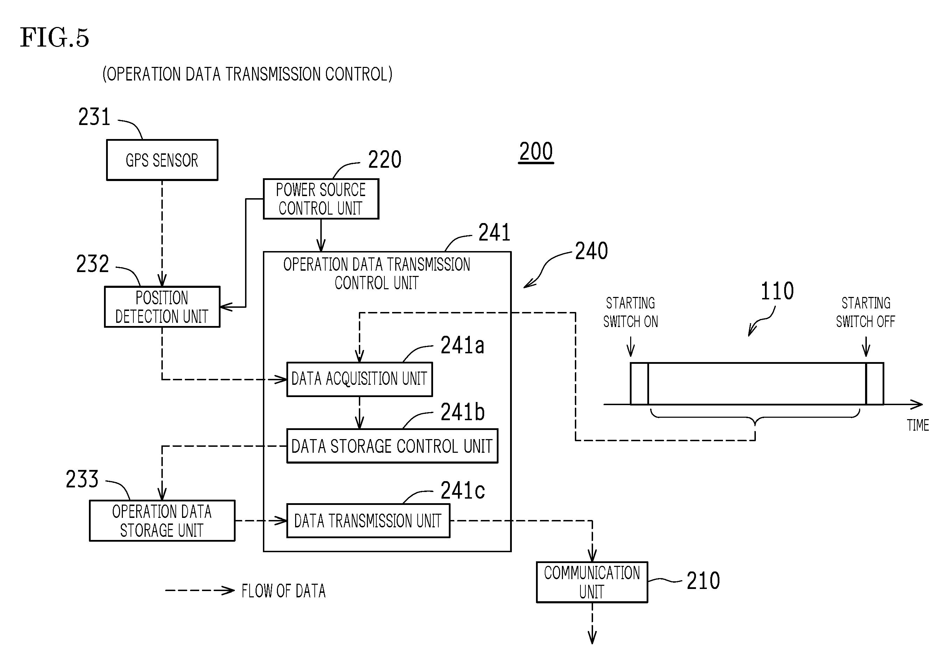

Fig. 5 is an operation diagram schematically illustrating a procedure of processing of operation data transmission control executed by the operation data transmission control unit 241 in the control unit 240 of the remote monitoring terminal device 200.

As illustrated in Fig. 5, the operation data transmission control unit 241 of the remote monitoring terminal device 200 acquires the operation data (see Fig. 4) at an acquisition date and time (more specifically, world standard year (A.D), month, day, hour, minute, and second) once in every predetermined interval (for example, once in every 30 seconds), and stored the operation data in the operation data storage unit 233. The operation data relates to the operation status of the work machine 110 input through the connection terminals T, ..., while the work machine 110 is operating.

The operation data transmission control unit 241 transmits operation data, stored once in every predetermined interval, to the remote server 130 (see Fig. 1).

More specifically, the operation data transmission control unit 241 functions as an operation unit including: a data acquisition unit 241a that acquires the operation data once in every predetermined interval (for example, 30 seconds) while the starting switch SW is ON; and a data storage control unit 241b that temporarily stores the operation data, acquired by the data acquisition unit 241a, in the operation data storage unit 233.

The operation data transmission control unit 241 also functions as an operation unit including a data transmission unit 241c that transmits the operation data, stored in the operation data storage unit 233, from the communication unit 210 to the remote server 130 (see Fig. 1).

The control unit 240 is turned OFF by the power source control unit 220 not when the OFF operation for the starting switch SW is performed, but after the operation data, stored in the operation data storage unit 233 by the data storage control unit 241b, is transmitted to the remote server 130. The remote monitoring terminal device 200 converts the operation data into a format compatible with the communication protocol supported by the communication unit 131 of the remote server 130, with the communication unit 210, and then transmits the operation data to the remote server 130 through the communication network 140 and the communication unit 131.

### (Example of processing executed by operation data transmission control unit)

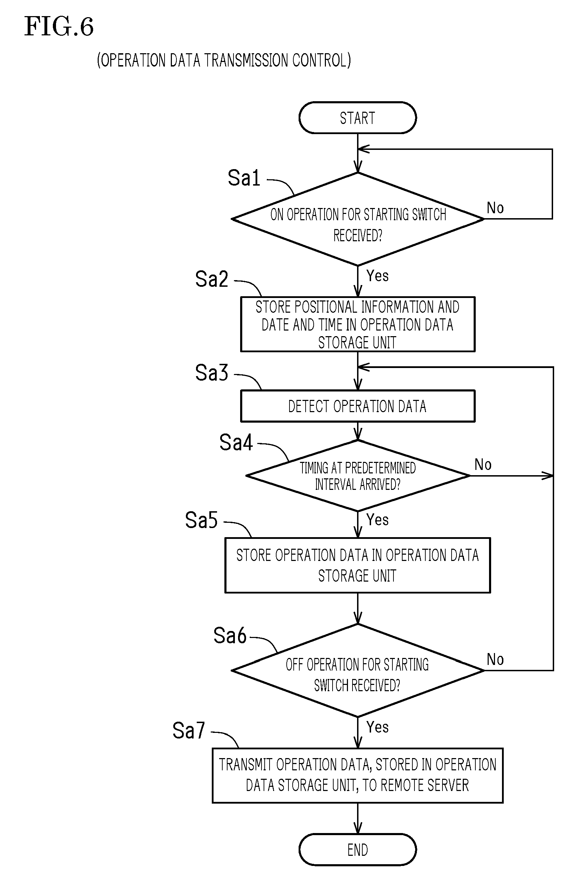

Next, an example of processing executed by the operation data transmission control unit 241 is described below with reference to Fig. 6.

Fig. 6 is a flowchart illustrating an example of control processing executed by the operation data transmission control unit 241.

In the flowchart illustrated in Fig. 6, upon receiving the ON operation for the starting switch SW (step Sa1: Yes), the operation data transmission control unit 241 acquires the positional information on the work machine 110 and the date and time with the GPS sensor 231 and the position detection unit 232 (see Figs. 3 and 5), and stores the positional information and the date and time in the operation data storage unit 233 (step Sa2).

Then, the operation data transmission control unit 241 detects the operation data on the work machine 110 with the output elements Q, ... (step Sa3), and determines whether a timing, at the predetermined interval (30 seconds in this example), has arrived (step Sa4). When the timing once in the predetermined interval has not arrived yet (step Sa4: No), the processing proceeds to step Sa3. On the other hand, when the timing of the predetermined interval has arrived in step Sa4 (step Sa4: Yes), the operation data transmission control unit 241 stores the operation data in the operation data storage unit 233 (step Sa5).

Then, the operation data transmission control unit 241 determines whether the OFF operation for the starting switch SW has been received (step Sa6). The processing proceeds to step Sa3 when the OFF operation has not been received (step Sa6: No). On the other hand, when the OFF operation has been received in step Sa6 (step Sa6: Yes), the operation data transmission control unit 241 transmits the operation data, stored in the operation data storage unit 233, to the remote server 130 (step Sa7), and the processing is terminated.

### [Remote server]

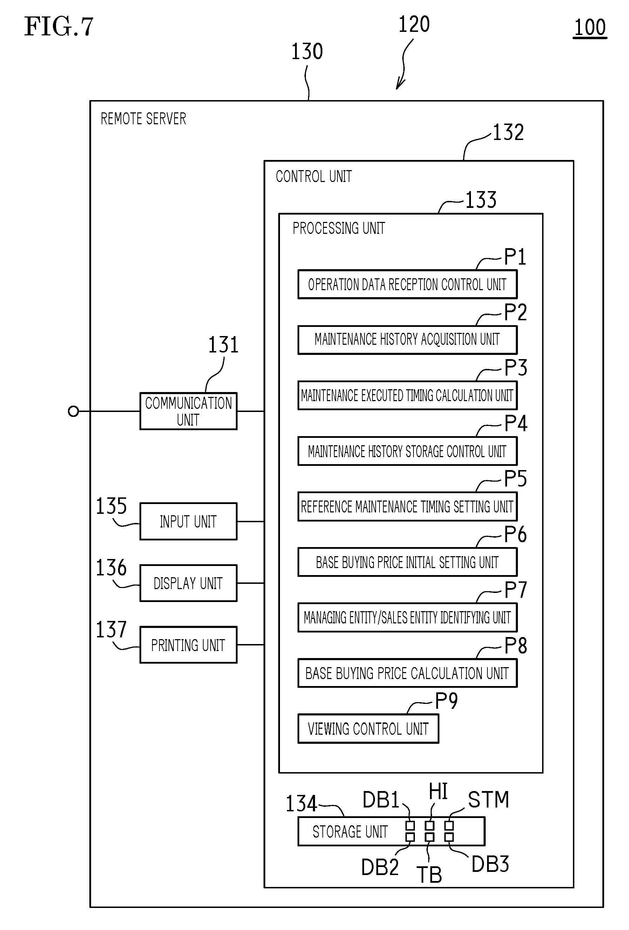

Fig. 7 is a block diagram illustrating a schematic configuration of a control unit 132 in the remote server 130 provided in the remote monitoring center 120.

As illustrated in Fig. 7, the remote server 130 provided in the remote monitoring center 120 includes: the communication unit 131; and the control unit 132 that transmits and receives data through communications, performs various input/output controls, and controls calculation processing.

### (Communication unit)

The communication unit 131 can communicates with the communication unit 210 of the remote monitoring terminal device 200 (see Figs. 1 to 3) under the common communication protocol. The data transmitted and received through communications is converted by the communication unit 131 to be compatible with the communication protocol. The communication unit 131 receives the operation data described above.

### (Control unit)

The control unit 132 includes: a processing unit 133 including a microcomputer such as a CPU; and a storage unit 134 including a ROM and a volatile memory such as a

### RAM.

The control unit 132 performs operation control on various components, with the processing unit 133 loading a control program, stored in the ROM of the storage unit 134 in advance, onto the RAM of the storage unit 134 and executing the control program.

A buying price of a used work machine 110 has conventionally been determined as follows. Specifically, a base buying price list is prepared in which a longer operation time of the work machine 110 is associated with a lower base buying price. The base buying price is assessed in accordance with the operation time of the work machine 110 with reference to the base buying price list. Then, deficiencies, such as stains and rust, on an outer view are checked for determining a final buying price based on the assessed base buying price.

An internal condition of the work machine 110 largely varies depending on the following aspects: whether a regular maintenance is performed at a predetermined inspection (legal inspection in particular) timing set in advance; and an operation status (operation time, use status, and the like). The operation status includes: a high load ratio as a ratio of high load operation time, in a state where a large load is imposed, to the entire operation time; and a work time ratio as a ratio of time, in which a vehicle is actually performing a work, to the entire operation time including a travelling time in which the vehicle travels. However, the operation status of the machine is not considered in the base buying price.

To achieve this, the control unit 132 in the remote server 130 stores a regular maintenance history input thereto as appropriate, or received from the work machine 110.

The regular maintenance is a maintenance (such as replacement of a certain part (genuine part) at a certain timing, as well as cleaning, adjustment, and greasing for a certain portion at a certain timing) performed by a manufacturer side (service center).

The concept of the service center not only includes service centers run by manufacturers, but also includes authorized distributors authorized by the manufacturers.

More specifically, the control unit 161, in the terminal device 160 (see Fig. 1) of the service center connected to the remote server 130 through the network 150, receives the regular maintenance history together with machine identification information, through a manual input operation (more specifically a key input operation) on the input unit 162. The regular maintenance history includes: part identification information (more specifically, a part code) for identifying a part; and maintenance content information (maintenance content code indicating replacement, cleaning, adjustment, greasing, and the like). The machine identification information (for example, a terminal phone number) is information for identifying the work machine 110. Then, the control unit 161 transmits the regular maintenance history and the machine identification information thus received to the remote server 130.

The remote monitoring terminal device 200 (see Fig. 3) in the work machine 110 further includes: the input unit 280 through which the part identification information and the maintenance content information, serving as the regular maintenance history, are input; and the display unit 290 that displays input information input through the input unit 280. The control unit 240 receives the regular maintenance history through a manual input operation (more specifically, key input operation) on the input unit 280, and transmits to the remote server 130, the regular maintenance history thus received together with the machine identification information (for example, a terminal phone number).

The remote server 130 further includes: an input unit 135 including a keyboard, a pointing device, and the like; a display unit 136 such as a display; and a printing unit 137 such as a printer. The control unit 132 displays an input screen on the display unit 136, receives required information input through the input unit 135, or print information, on which print processing has been executed, by the printing unit 137.

The control unit 132 in the remote server 130 receives the regular maintenance history, including the part identification information and the maintenance content information, together with the machine identification information (for example a terminal phone number), through a manual input operation (more specifically a key input operation) on the input unit 135.

The input unit 162 in the terminal device 160, the input unit 280 in the remote monitoring terminal device 200, and the input unit 135 in the remote server 130 may each include a reading device (for example, a barcode reading device) that reads the part identification information (more specifically, the part code), and the control unit 161 in the terminal device 160, the control unit 240 in the remote monitoring terminal device 200, and the control unit 132 in the remote server 130 may receive the part identification information read by the input unit 162, the input unit 280, and the input unit 135. In the remote monitoring system 100, the input of the regular maintenance history may be performed in at least one of the terminal device 160, the remote monitoring terminal device 200, and the remote server 130.

The control unit 132 (see Fig. 7) in the remote server 130 acquires the regular maintenance history, received by the input unit 162, the input unit 280, or the input unit 135, together with the machine identification information (for example, a terminal phone number).

The control unit 132 calculates maintenance executed timing information by calculating integrated time at the point when the regular maintenance is performed on a part corresponding to the part identification information, by using the operating time (integrated time) of the work machine 110.

The integrated time at the maintenance executed timing can be calculated from the operating time (integrated time) of the work machine 110 at the point when the regular maintenance is executed. When the regular maintenance is executed for the second time and after, the integrated time can be calculated from the operating time (integrated time) stored in the storage unit 134, for each machine identification information and for each part identification information, when the regular maintenance is executed in the past.

The control unit 132 may acquire the integrated time at the point of executing the regular maintenance as follows. Specifically, the operating time (integrated time) of the work machine 110, displayed on a display screen of the display unit 290 in the work machine 110 at the point when the regular maintenance is executed, may be acquired through a manual input operation on the input unit 162, the input unit 280, or the input unit 135. Alternatively, the operating time (integrated time) of the work machine 110 at the point when the part identification information is acquired from the operation data received from the remote monitoring terminal device 200 may be automatically acquired.

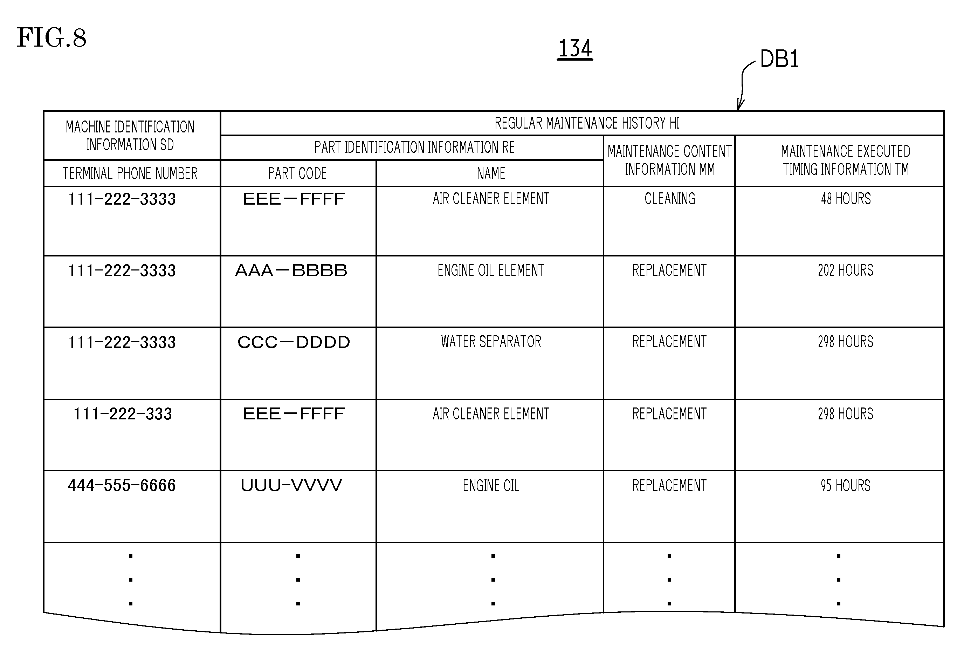

The control unit 132 stores a regular maintenance history for each machine identification information (for example, a terminal mobile phone number). The regular maintenance history includes the part identification information acquired, maintenance content information MM (see Fig. 8 described below), and maintenance executed timing information calculated.

Components in Fig. 7 that are not described above will be described below.

Fig. 8 is a schematic diagram illustrating an example of a data structure of a first database DB1 storing therein, for each machine identification information SD, a regular maintenance history HI including part identification information RE, the maintenance content information MM, and maintenance executed timing information TM.

As illustrated in Fig. 8, the first database DB1, in the storage unit 134, stores therein, for each machine identification information SD, the regular maintenance history HI including the part identification information RE, the maintenance content information MM, and the maintenance executed timing information TM.

The control unit 132 identifies at least one of a managing entity (more specifically, a rental company) of the work machine 110 and a sales entity (more specifically, a dealer) in charge of the managing entity, based on the machine identification information on the work machines 110, .... Then, the control unit 132 calculates the base buying price of the work machine 110 based on the regular maintenance history HI stored and the operation data received from a corresponding one of the work machines 110, .... The base buying price thus calculated can be viewed in at least one of the managing entity and the sales entity, after a predetermined period (for example, three years) has elapsed after a predetermined counting start day (for example, a delivery day of the work machine 110).

The predetermined period is set between the viewing timing and the counting start day because, for example, there needs to be a certain period for the work machine 110 to be approved as a used product. Furthermore, the predetermined period is required for sufficiently collecting the regular maintenance history HI and the operation data required for calculating the base buying price.

More specifically, as illustrated in Fig. 7, the control unit 132 includes an operation data reception control unit P1, a maintenance history acquisition unit P2, a maintenance executed timing calculation unit P3, a maintenance history storage control unit P4, a reference maintenance timing setting unit P5, a base buying price initial setting unit P6, a managing entity/sales entity identifying unit P7, a base buying price calculation unit P8, and a viewing control unit P9.

The operation data reception control unit P1 receives the operation data, transmitted from the operation data transmission control unit 241 of each of the work machines 110, ..., for each machine identification information SD (for example, a terminal phone number), and stores the operation data in the storage unit 134.

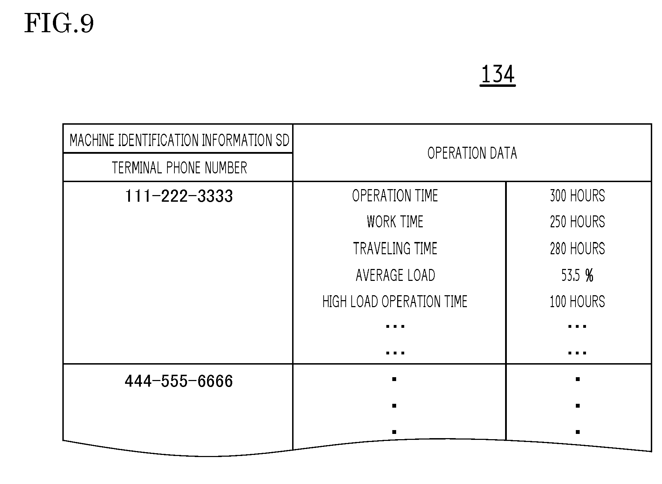

Fig. 9 is a schematic diagram illustrating an example of a data structure of operation data stored in the storage unit 134.

As illustrated in Fig. 9, the storage unit 134 stores therein operation data (operation data such as operation time, working time, travelling time, average load, and high load operation time, in this example) for each machine identification information SD.

The maintenance history acquisition unit P2 acquires the regular maintenance history HI, received by the input unit 162, the input unit 280, or the input unit 135, together with the machine identification information SD of the work machine 110 on which the regular maintenance has been performed.

The maintenance executed timing calculation unit P3 calculates the maintenance executed timing information TM from the operation time (integrated time) of the work machine 110 at the point when the regular maintenance is executed. The maintenance executed timing information TM is the integrated time of a maintenance part corresponding to the part identification information of the machine identification information acquired by the maintenance history acquisition unit P2.

The maintenance history storage control unit P4 stores the regular maintenance history HI (see Fig. 8) in the storage unit 134, for each machine identification information SD of the work machine 110 on which the regular maintenance has been performed. The regular maintenance history HI includes: the part identification information RE and the maintenance content information MM acquired by the maintenance history acquisition unit P2; and the maintenance executed timing information TM calculated by the maintenance executed timing calculation unit P3.

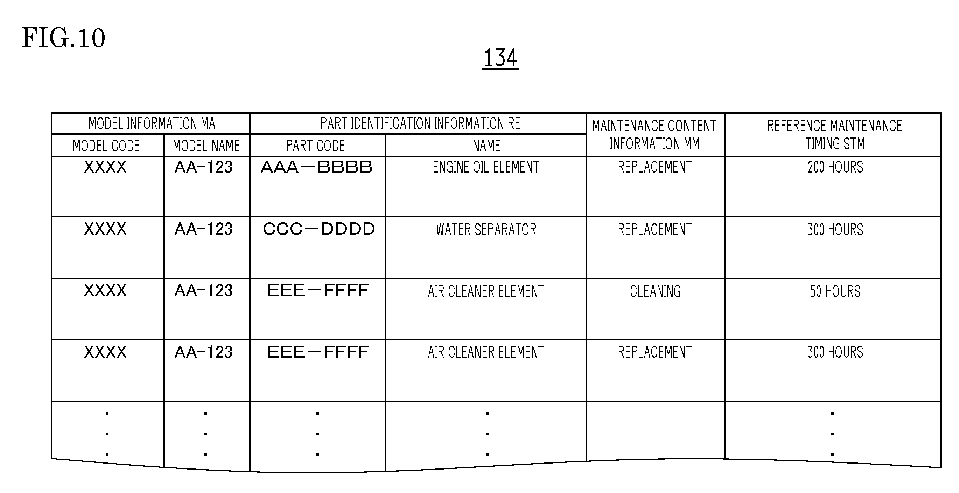

The reference maintenance timing setting unit P5 sets (stores) in the storage unit 134 in advance, a reference maintenance timing STM (see Fig. 10 described below), for each model information MA. The reference maintenance timing STM indicates a timing at which a regularly replaced part should be replaced at predetermined regular inspection time. For example, the reference maintenance timing STM may be input by a manual input operation.

Fig. 10 is a schematic diagram illustrating an example of a data structure of the reference maintenance timing STM set in advance in the storage unit 134.

As illustrated in Fig. 10, the reference maintenance timing STM (in this example, reference maintenance timings including part replacement timings such as 200 hours, 300 hours, and 300 hours, and a part cleaning timing such as 50 hours) is set

(stored) in the storage unit 134 in advance for the part identification information RE (in this example, repair parts for replacement of AAA-BBBB [engine oil element], replacement of CCC-DDDD [water separator], cleaning and replacement of EEE-FFFF [air cleaner element], and the like) and for each model information MA.

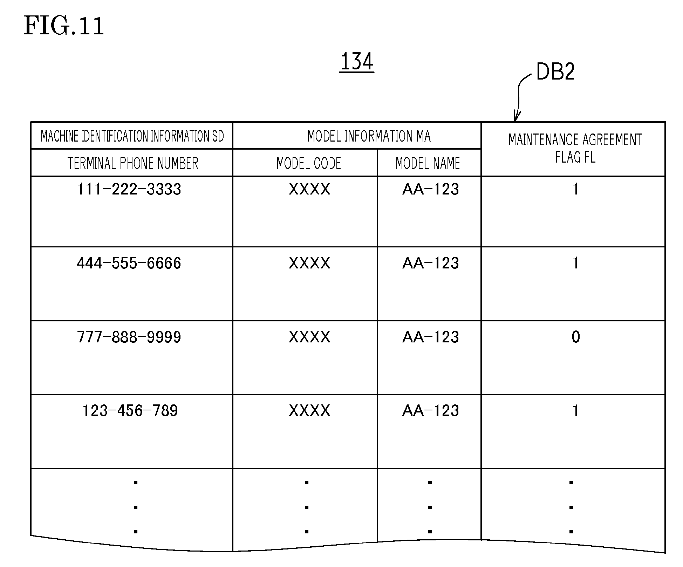

Fig. 11 is a schematic diagram illustrating an example of a data structure of a second database DB2 storing therein the machine identification information SD and the model information MA that are associated with each other.

As illustrated in Fig.11, the second database DB2 in the storage unit 134 stores in advance therein, the model information MA (more specifically, a model code and a model name of the work machine 110) and the machine identification information SD (a terminal phone number in the example illustrated in Fig. 11) that are associated with each other. The control unit 132 can be recognize the model information MA by referring to the second database DB2 in the storage unit 134 with the machine identification information SD. In the present embodiment, to the second database DB2, in the storage unit 134, a maintenance agreement flag FL, indicating whether a predetermined maintenance agreement is valid for the machine identification information SD of each of the work machines 110, ..., is provided. In the example illustrated in Fig. 11, the maintenance agreement flag FL is "1", indicating an ON state, for the machine identification information SD of each of the work machines 110, ... that is covered by the predetermined maintenance agreement, and is "0", indicating an OFF state, for the machine identification information SD of each of the work machines 110, ... that is not covered by the predetermined maintenance agreement.

The predetermined maintenance agreement is for performing maintenance, with a certain maintenance content (recommended maintenance content such as replacing, cleaning, adjustment, and greasing for a part performed at a timing recommended by a manufacturer) recommended by the manufacturer, in addition to the predetermined regular inspection (in particular, legal inspection).

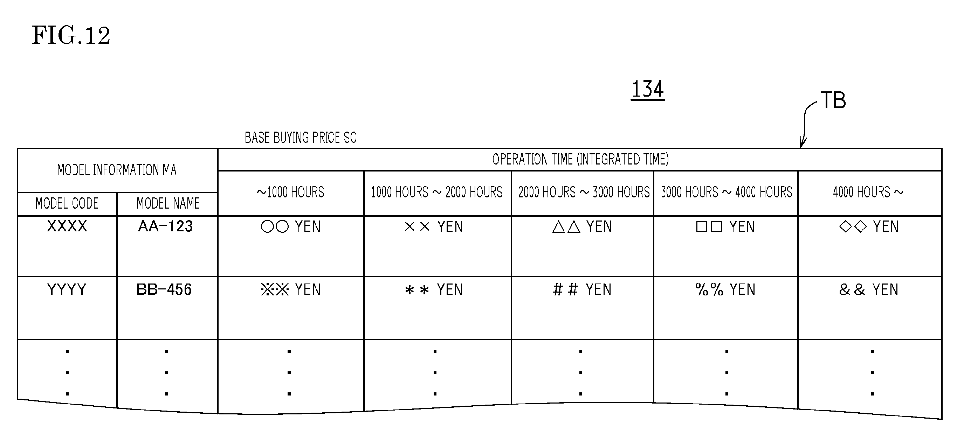

In the storage unit 134, a base buying price list table TB (see Fig. 12 described below), in which a longer operation time (integrated time) of the work machine 110 is associated with a lower base buying price, is set in advance for each model information.

Fig. 12 is a schematic diagram illustrating an example of a data structure of the base buying price list table TB in which base buying prices SC is stored for each model information MA.

As illustrated in Fig. 12, the base buying price list table TB in the storage unit 134 stores in advance therein, the base buying price SC for each model information MA. The base buying price SC is set to be lower for a longer operation time of the work machine 110. In the example illustrated in Fig. 12, the base buying price SC of a model AA-123 (XXXX) is set to be ○○ yen when the operation time is less than 1000 hours, xx yen when the operation time is equal to or more than 1000 hours, and less than 2000 hours, ΔΔ yen when the operation time is equal to or more than 2000 hours, and less than 3000 hours, □□ yen when the operation time is equal to or more than 3000 hours, and less than 4000 hours, and ◇◇ yen when the operation time is equal to or more than 4000 hours, (where ○○ yen > xx yen > ΔΔ yen > □□ yen > ◇◇ yen). The base buying price SC of a model BB-456 (YYYY) is set to be @ @ yen when the operation time is less than 1000 hours, ** yen when the operation time is equal to or more than 1000 hours, and less than 2000 hours, ## yen when the operation time is equal to or more than 2000 hours, and less than 3000 hours, %% yen when the operation time is equal to or more than 3000 hours, and less than 4000 hours, and && yen when the operation time is equal to or more than 4000 hours, (where @ @ yen > ** yen > ## yen > %% yen > && yen). The control unit 132 can recognize an initial base buying price SC by referring to the base buying price list table TB of the machine identification information SD in the storage unit 134, with the operation time of the work machine 110.

As illustrated in Fig. 12, the base buying price initial setting unit P6 sets the initial base buying price SC based on the operation time of the work machine 110 and the base buying price SC set in advance while being associated with the operation time of the model information MA of the work machine 110 corresponding to the machine identification information SD.

More specifically, the base buying price initial setting unit P6 sets the initial base buying price SC based on the operation time of the model information MA corresponding to the machine identification information SD for which the base buying price SC is to be set in the base buying price list table TB in the storage unit 134.

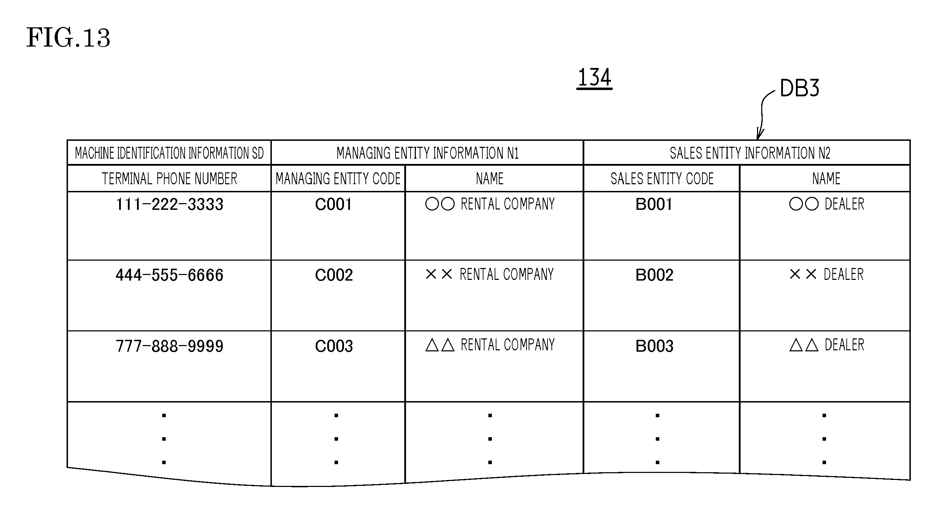

Fig. 13 is a schematic diagram illustrating an example of a data structure of a third database DB3 storing therein the machine identification information SD, managing entity information N1, and sales entity information N2 that are associated with each other.

As illustrated in Fig. 13, the third database DB3 in the storage unit 134 stores therein in advance, the managing entity information N1 and the sales entity information N2 (in the example illustrated in Fig.13, a code and a name of a managing entity and a code and a name of a sales entity) associated with the machine identification information SD (in the example illustrated in Fig. 13, a terminal phone number). The control unit 132 can recognize the managing entity information N1 and the sales entity information N2 by referring to the third database DB3 in the storage unit 134, with the machine identification information SD.

As described above, the managing entity and the sales entity can be identified with the managing entity information N1 and the sales entity information N2 set (stored) while being associated with the machine identification information SD. For example, with a terminal phone number "111-222-333" set to the remote monitoring terminal device 200 in the work machine 110, "C001" (oo rental company) and "B001" (oo dealer) can be identified as the managing entity information N1 and the sales entity information N2 acquired by the third database DB3.

As illustrated in Fig. 13, the managing entity/sales entity identifying unit P7 uses the managing entity information N1 and the sales entity information N2, set in advance while being associated with the machine identification information SD, to identify the managing entity information N1 and the sales entity information N2 based on the machine identification information SD (for example, a terminal phone number) for which the managing entity information N1 and the sales entity information N2 are to be obtained.

More specifically, the managing entity/sales entity identifying unit P7 identifies the managing entity information N1 and the sales entity information N2 that match the machine identification information SD in the third database DB3 in the storage unit 134.

The base buying price calculation unit P8 increases/deceases the base buying price SC of the work machine 110 based on the regular maintenance history HI (see Fig. 8) stored in the storage unit 134 by the maintenance history storage control unit P4 and the operation data (see Fig. 9) received from the work machines 110, ... by the operation data reception control unit P1 (that is, from an operating state (operation time, use state, and the like) of the machine). For example, the calculation of increasing the base buying price SC includes: a calculation of multiplying the base buying price SC by a preset value larger than 1; a calculation of adding a preset incrementing value to the base buying price SC. The calculation of reducing the base buying price SC includes: a calculation of multiplying the base buying price SC by a preset value equal to or larger than 0 and smaller than 1; a calculation of subtracting a preset decrementing value from the base buying price SC.

In the present embodiment, the base buying price calculation unit P8 increases/decreases the base buying price SC in accordance with the operating state based on whether the regular maintenance is performed and the operation data.

More specifically, the base buying price calculation unit P8 increases/decreases the base buying price SC based on whether the regular maintenance is performed at the reference maintenance timing STM (see Fig. 10) for a repair part set by the reference maintenance timing setting unit P5, in the regular maintenance history HI (see Fig. 8) stored in the storage unit 134 by the maintenance history storage control unit P4.

More specifically, the base buying price calculation unit P8 determines an executed status of the regular maintenance (regular periodical maintenance) at the reference maintenance timing STM, and increases/decreases the base buying price SC in accordance with an execution frequency of the regular maintenance at the reference maintenance timing STM. For example, the base buying price calculation unit P8 calculates the execution frequency of the regular maintenance at the reference maintenance timing STM. When the execution frequency exceeds a predetermined execution frequency range set in advance (including a case where the regular maintenance has been executed every time), the base buying price SC is increased. The base buying price SC stays the same when the execution frequency is within the predetermined execution frequency range. When the execution frequency falls below the predetermined execution frequency range (including a case where the regular maintenance has not been executed at all), the base buying price SC is reduced.

The base buying price calculation unit P8 increases/reduces the base buying price SC in accordance with the operating state based on the operation data (see Fig. 9) received by the operation data reception control unit P1.

More specifically, the base buying price calculation unit P8 increases/reduces the base buying price SC in accordance with the operating state based on the operation data. For example, the base buying price calculation unit P8 calculates the high load ratio as a ratio of the high load operation time of a state where a predetermined load (for example, a high load that is about 80%) set in advance is imposed to the entire operation time. When the high load ratio falls below the predetermined high load ratio range set in advance, the base buying price SC is increased. The base buying price SC stays the same when the high load ratio is within the predetermined high load ratio range. When the high load ratio exceeds the predetermined high load ratio range set in advance, the base buying price SC is reduced. For example, the base buying price calculation unit P8 calculates the work time ratio as a ratio of the work time MT to the entire operation time including the traveling time DT. When the work time ratio falls below the predetermined work time ratio range set in advance, the base buying price SC is increased. The base buying price SC stays the same when the work time ratio is within the predetermined work time ratio range. When the work time ratio exceeds the predetermined work time ratio range, the base buying price SC is reduced.

In the present embodiment, the base buying price calculation unit P8 increases/reduces the base buying price SC based on whether the predetermined maintenance agreement is valid

More specifically, the base buying price calculation unit P8 increases the base buying price SC of each of the work machines 110, ... that is covered by the predetermined maintenance agreement, and/or (and in this example) reduces the base buying price SC of each of the work machines 110, ... that is not covered by the predetermined maintenance agreement.

More specifically, the base buying price calculation unit P8 determines whether the maintenance agreement flag FL (see Fig. 11) of the work machine 110 corresponding to the machine identification information SD is in "1" (contract covered work machine) indicating the ON state, or is "0" (contract uncovered work machine) indicating the OFF state. The base buying price SC is increased when the flag is "1" (contract covered work machine) indicating the ON state, and is reduced when the flag is "0" (contract uncovered work machine) indicating the OFF state.

The viewing control unit P9 makes the base buying price SC, calculated by the base buying price calculation unit P8, viewable in the managing entity information and/or the sales entity identified by the managing entity/sales entity identifying unit P7, when a predetermined period elapses after the predetermined counting start day.

More specifically, the viewing control unit P9 transmits to the terminal device 160 in the managing entity and/or the sales entity identified by the managing entity/sales entity identifying unit P7, the information on the base buying price SC calculated by the base buying price calculation unit P8.

The control unit 161 in the terminal device 160 (see Fig. 1) of the managing entity and/or the sales entity displays the information on the base buying price SC, transmitted from the remote server 130, on a display screen of the display unit 163 in the terminal device 160.

In the present embodiment, the viewing control unit P9 makes the base buying price SC viewable in the managing entity, in such a manner that the managing entity can view the base buying price SC of the contract covered work machine which is one of the work machines 110 that is covered by the predetermined maintenance agreement.

More specifically, the viewing control unit P9 transmits to the terminal device 160 in the sales entity, the information on the base buying price SC of the work machine 110 regardless of whether the predetermined maintenance agreement is valid (more specifically, regardless of the state of the maintenance agreement flag FL). On the other hand, the viewing control unit P9 transmits to the terminal device 160 in the managing entity, only each of pieces of information on the base buying prices SC that corresponds to the work machine 110 covered by the predetermined maintenance agreement (more specifically, the work machine 110 corresponding to the machine identification information SD with the maintenance agreement flag FL set to "1" indicating the ON state).

### (Example of processing executed by control unit in remote server)

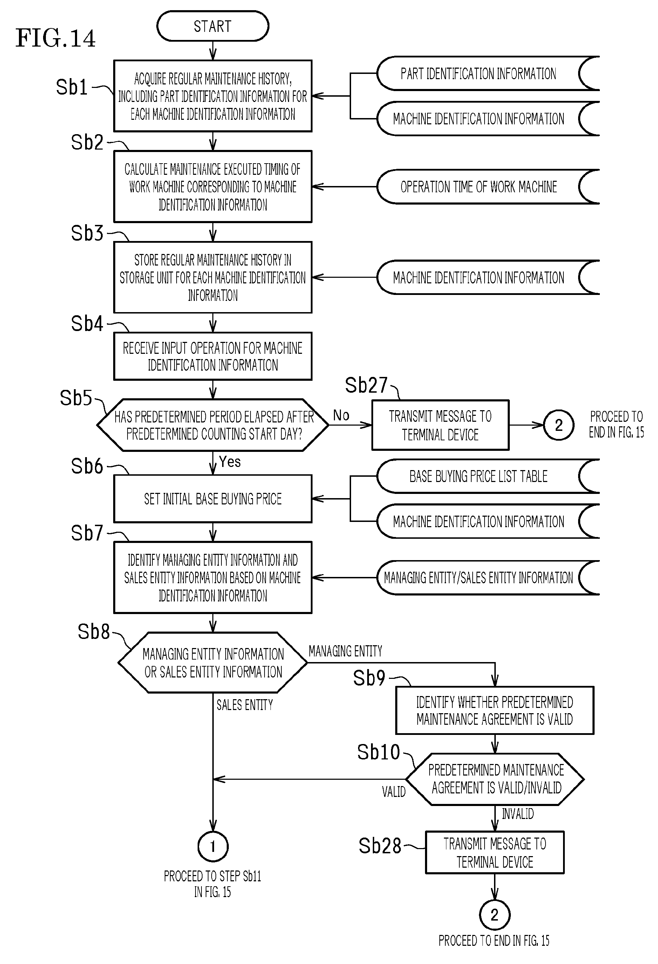

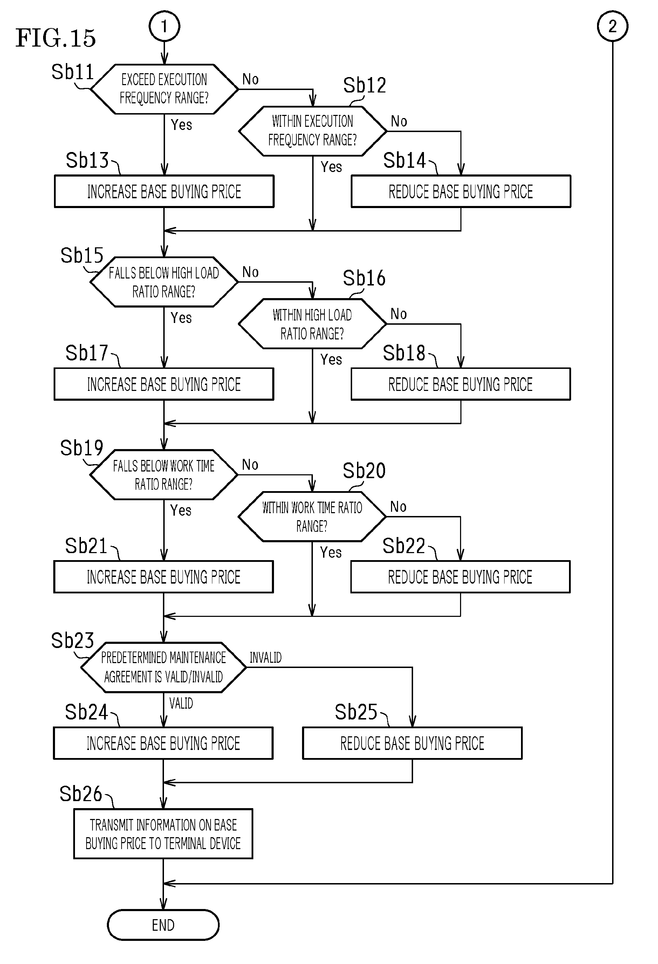

Next, an example of processing executed by the control unit 132 in the remote server 130 is described below with reference to Figs. 14 and 15.

Figs. 14 and 15 are each a flowchart illustrating an example of control processing executed by the control unit 132 in the remote server 130. Fig. 14 illustrates the first half of the processing, and Fig. 15 illustrates the second half of the processing.

Before the processing in the flowcharts in Figs. 14 and 15 is executed, the control unit 132 has caused the operation data reception control unit P1 to receive the operation data from the operation data transmission control unit 241 in the work machines 110, ... for each machine identification information SD (for example, a terminal phone number), and store the operation data in the storage unit 134 (see Fig. 9). Furthermore, the reference maintenance timing setting unit P5 has set (stored) the reference maintenance timing STM in the storage unit 134 (see Fig. 10).

In the flowchart illustrated in Fig. 14, the control unit 132 first of all causes the maintenance history acquisition unit P2 to acquire the regular maintenance history HI, including the part identification information RE, from the input unit 162, the input unit 280, or the input unit 135, together with the machine identification information SD (step Sb1).

Next, the control unit 132 causes the maintenance executed timing calculation unit P3 to calculate the maintenance executed timing information TM as the integrated time of a maintenance part corresponding to the part identification information RE of the work machine 110 corresponding to the machine identification information acquired in step Sb1, based on the operation time of the work machine 110 (step Sb2).

Then, the control unit 132 causes the maintenance history storage control unit P4 to store the regular maintenance history HI in the storage unit 134 for each machine identification information SD (see Fig. 8) (step Sb3). The regular maintenance history HI includes: the part identification information RE acquired in step Sb1; the maintenance content information MM; and the maintenance executed timing information TM calculated in step Sb2.

Then, the control unit 132 receives an input operation for the machine identification information SD (for example, a terminal phone number) corresponding to the work machine 110 for which the base buying price SC is to be assessed, from the input unit 162 in the terminal device 160 (see Fig. 1) in the managing entity or the sales entity connected to the remote server 130 through the network 150 (step Sb4).

Then, the control unit 132 causes the viewing control unit P9 to determine whether the predetermined period (for example, three years) has elapsed from the predetermined counting start day (for example, the delivery day of the work machine 110) of the work machine 110 corresponding to the machine identification information SD received in step Sb4 (step Sb5). When the predetermined period has elapsed (step Sb5: Yes), the processing proceeds to step Sb6.

Next, the control unit 132 causes the base buying price initial setting unit P6 to use the base buying price list table TB (see Fig. 12) to set the initial base buying price SC based on the operation time of the model information MA corresponding to the machine identification information SD received in step Sb4 (step Sb6).

Then, the control unit 132 causes the managing entity/sales entity identifying unit P7 to use the managing entity information N1 and the sales entity information N2 (see

Fig. 13) set in advance while being associated with the machine identification information SD to identify the managing entity information N1 and the sales entity information N2 based on the machine identification information SD (for example, a terminal phone number) received in step Sb4 (step Sb7).

Then, the control unit 132 determines whether the information, identified in step Sb7, is the managing entity information N1 or the sales entity information N2 (step Sb8). When the information is the sales entity information N2 (step Sb8: sales entity), the processing proceeds to step Sb11 in Fig. 15. When the information is the managing entity information N1 (step Sb8: managing entity), whether the predetermined maintenance agreement is valid is determined based on the machine identification information SD received in step Sb4, with the second database DB2 (see Fig. 11) (step Sb9).

Then, the control unit 132 causes the viewing control unit P9 to determine whether the predetermined maintenance agreement is valid for the work machine 110 corresponding to the machine identification information SD, based on the maintenance agreement flag FL (step Sb10). When the predetermined maintenance agreement is valid

### (step Sb10: Valid), the processing proceeds to step Sb11 in Fig. 15.

Then, as illustrated in Fig. 15, the control unit 132 causes the base buying price calculation unit P8 to determine whether the execution frequency of the regular maintenance at the reference maintenance timing STM is within the predetermined execution frequency range (steps Sb11 and Sb12). When the execution frequency exceeds the predetermined execution frequency range (step Sb11: Yes), the base buying price SC is increased (step Sb13), and the processing proceeds to step Sb15. When the execution frequency is within the predetermined execution frequency range (step Sb12: Yes), the base buying price SC stays the same, and the processing directly proceeds to step Sb15. When the execution frequency falls below the predetermined execution frequency range (step Sb12: No), the base buying price SC is reduced (step Sb14), and the processing proceeds to step Sb15.

Then, the control unit 132 causes the base buying price calculation unit P8 to determine whether the high load ratio, which is a ratio of the high load operation time in a state where the predetermined load (for example, a high load of about 80%) is imposed, to the entire operation time is within the predetermined high load ratio range (steps Sb15 and Sb16). When the high load ratio falls below the predetermined high load ratio range (step Sb15: Yes), the base buying price SC is increased (step Sb17), and the processing proceeds to step Sb19. When the high load ratio is within the predetermined high load ratio range (step Sb16: Yes), the base buying price SC stays the same, and the processing directly proceeds to step Sb19. When the high load ratio exceeds the predetermined high load ratio range (step Sb16: No), the base buying price SC is reduced (step Sb18), and the processing proceeds to step Sb19.

Then, the control unit 132 causes the base buying price calculation unit P8 to determine whether the work time ratio, as a ratio of the work time MT to the entire operation time including the traveling time DT, is within the predetermined work time ratio range (steps Sb19 and Sb20). When the work time ratio falls below the predetermined work time ratio range (step Sb19: Yes), the base buying price SC is increased (step Sb21), and the processing proceeds to step Sb23. When the work time ratio is within the predetermined work time ratio range (step Sb20: Yes), the base buying price SC stays the same, and the processing directly proceeds to step Sb23. When the work time ratio exceeds the predetermined work time ratio range (step Sb20: No), the base buying price SC is reduced (step Sb22), and the processing proceeds to step Sb23.

Then, the control unit 132 causes the base buying price calculation unit P8 to identify whether the predetermined maintenance agreement is valid for the work machine 110 corresponding to the machine identification information SD, based on the maintenance agreement flag FL (step Sb23). When the predetermined maintenance agreement is valid (step Sb23: Valid), the base buying price SC is increased (step Sb24), and the processing proceeds to step Sb26. When the predetermined maintenance agreement is invalid (step Sb23: Invalid), the base buying price SC is reduced (step Sb25), and the processing proceeds to step Sb26.

Then, the control unit 132 causes the viewing control unit P9 to transmit the information on the base buying price SC, calculated in steps Sb11 to Sb25, to the terminal device 160 in the managing entity and/or the sales entity for which the machine identification information SD has been input in step Sb4 (step Sb26), and the processing is terminated.

In the managing entity and/or the sales entity where the machine identification information SD has been input in step Sb4, the information on the base buying price SC, transmitted from the remote server 130, is displayed on the display screen of the display unit 163 in the terminal device 160, to be viewable.

The information on the base buying price SC, transmitted from the remote server 130, is transmitted to a used vehicle assessment system separately provided. In the used vehicle assessment system, the final buying price is determined based on: the information on the base buying price SC, transmitted from the remote server 130; actual inspection information that is input by a manual operation, and represents a check sheet on which deficiencies such as stain and rust on an outer view are recorded, checked by actually inspecting the work machine 110; and information on a market price and an inventory status.

When the predetermined period has not elapsed after the predetermined counting start day in step Sb5 in Fig. 14 (step Sb5: No), the control unit 132 transmits a message to the terminal device 160 in the managing entity where the machine identification information SD has been input in step Sb4 (step Sb27). This message indicates that the base buying price SC of the work machine 110, corresponding to the machine identification information SD input, cannot be viewed because the predetermined period has not elapsed after the predetermined counting start day. Then, the processing is terminated.

When it is determined that the predetermined maintenance agreement is invalid in step Sb10 in Fig. 14 (step Sb10: Invalid), the control unit 132 transmits a message to the terminal device 160 in the managing entity where the machine identification information SD has been input in step Sb4 (step Sb28). This message indicates that the base buying price SC of the work machine 110, corresponding to the machine identification information SD input, cannot be viewed because the maintenance agreement is invalid. Then, the processing is terminated.

### (Operations and effects of present embodiment)

As described above, in the present embodiment, at least one of the managing entity or the sales entity of the work machine 110 is identified based on the machine identification information SD. The base buying price SC is calculated based on the regular maintenance history HI and the predetermined operation data received from the work machine 110. The base buying price SC thus calculated becomes viewable in at least one of the managing entity and the sales entity, when the predetermined period elapses after the predetermined counting start day. Thus, the buying price of the used work machine 110 can be calculated. Furthermore, the base buying price SC, based on the regular maintenance history HI and the operating state of the work machine 110, can be automatically presented to the managing entity and/or the sales entity. In this manner, a decision making material for deciding whether to continue using the work machine 110 or buy a new one can be provided.

In the present embodiment, the base buying price SC can be preferentially assessed for the contract covered work machine, with the base buying price SC increased for the contract covered work machine and/or reduced for the contract uncovered work machine. Thus, the predetermined maintenance agreement can be promoted.

In the present embodiment, the base buying price SC viewable in the managing entity is that of the contract covered work machine 110 only. This means that there is a difference between the contract covered work machine and the contract uncovered work machine, in viewing permission for the base buying price SC. Thus, the predetermined maintenance agreement can be promoted.

### (Other embodiments)

The remote monitoring system 100 according to the present embodiment is applied to a traveling work machine such as a combine harvester, a tiller, and a rice transplanter. However, this should not be construed in a limiting sense, and the remote monitoring system 100 can be suitably applied also to a traveling work machine such as a construction machine including a tractor, an excavator, a wheel loader, and a carrier, and also to a vessel such as a pleasure boat and a fishing boat.

The present invention is not limited to the embodiment described above, and can be implemented in other various forms. Thus, the embodiment is exemplary in every respect, and should not be construed as limiting. The scope of the present invention is defined by claims, and is not limited in any way by the description in the specification. The scope of the present invention encompasses any change and modification within a scope equivalent to the scope of claims.

The present application claims priority based on Patent Application No. 2014-045373 filed in Japan on March 7 2014, the content of which is herein incorporated by reference.

### Industrial Applicability

The present invention relates to a remote server that receives from a work machine or a vessel, machine identification information, identifying the work machine or the vessel, and predetermined operation data, and can be applied for calculating a buying price of a used work machine or vessel, in particular.

### Reference Signs List

- 100: Remote monitoring system
- 110: Work machine
- 111: Work unit
- 111a: Traveling work unit
- 112: Engine
- 113: electronic control device
- 113a: Engine controller
- 114: Generator
- 120: Remote monitoring center
- 130: Remote server
- 131: Communication unit
- 132: Control unit
- 133: Processing unit
- 134: Storage unit
- 135: Input unit
- 136: Display unit
- 137: Printing unit
- 140: Communication network
- 150: Network
- 160: Terminal device
- 161: Control unit
- 162: Input unit
- 163: Display unit
- 200: Remote monitoring terminal device
- 210: Communication unit
- 220: Power source control unit
- 231: GPS sensor
- 232: Position detection unit
- 233: Operation data storage unit
- 240: Control unit
- 241: Operation data transmission control unit
- 241a: Data acquisition unit
- 241b: Data storage control unit
- 241c: Data transmission unit
- 250: Processing unit
- 260: Storage unit
- 280: Input unit
- 290: Display unit
- BT: Battery
- DB1: First database
- DB2: Second database
- DB3: Third database
- DT: Traveling time
- FL: Maintenance agreement flag
- HI: Regular maintenance history
- L1: Power source connection line
- L2: Power source connection line
- L3: Power source connection line
- L4: Power source connection line
- MA: Model information
- MM: Maintenance content information
- MT: Work time
- N: Service center information
- N1: Managing entity information
- N2: Sales entity information
- P1: Operation data reception control unit
- P2: Maintenance history acquisition unit
- P3: Maintenance executed timing calculation unit
- P4: Maintenance history storage control unit
- P5: Reference maintenance timing setting unit
- P6: Base buying price initial setting unit
- P7: Managing entity/sales entity identifying unit
- P8: Base buying price calculation unit
- P9: Viewing control unit
- RE: Part identification information
- SC: Base buying price
- SD: Machine identification information
- STM: Reference maintenance timing
- SW: Starting switch
- T: Connection terminal
- TB: Base buying price list table
- TM: Maintenance executed timing information

## Claims

1. A remote server that receives from a work machine or a vessel, machine identification information, identifying the work machine or the vessel, and predetermined operation data,
wherein at least one of a managing entity of the work machine or the vessel and a sales entity in charge of the managing entity is identified based on the machine identification information,
wherein a base buying price of the work machine or the vessel is calculated based on the predetermined operation data received from the work machine or the vessel, and any one of a regular maintenance history input as appropriate and a regular maintenance history received from the work machine or the vessel, and
wherein the base buying price calculated is set to be viewable in at least one of the managing entity and the sales entity when a predetermined period elapses after a predetermined counting start day.

2. The remote server according to claim 1, wherein the base buying price is calculated by being increased for the work machine or the vessel as a contract covered work machine or a contract covered vessel covered by a predetermined maintenance agreement, and/or by being reduced for the work machine or the vessel as a contract uncovered work machine or a contract uncovered vessel not covered by the predetermined maintenance agreement.

3. The remote server according to claim 1 or 2, wherein the base buying price viewable in the managing entity is limited to the base buying price of the work machine or the vessel as the contract covered work machine or the contract covered vessel covered by the predetermined maintenance agreement.
